# EUROPEAN PATENT SPECIFICATION

(11) **EP 3 378 142 B1**
(45) Date of publication and mention of the grant of the patent: **06.12.2023**
(21) Application number: 16797553.1
(22) Date of filing: 16.11.2016
(51) Int. Cl.: H02K 3/52, F02B 39/10, H02K 5/22, H02K 19/10, F02B 33/00, H02K 7/18

(54) **A STATOR AND BUSBAR ASSEMBLY FOR AN ELECTRIC SUPERCHARGER**
STATOR- UND SAMMELSCHIENENANORDNUNG FÜR EINEN ELEKTRISCHEN SUPERLADER
STATOR ET ENSEMBLE BARRES OMNIBUS POUR UN COMPRESSEUR VOLUMÉTRIQUE ÉLECTRIQUE

(30) Priority: 20.11.2015 GB 201520443
(43) Date of publication of application: 26.09.2018
(73) Proprietor: Valeo Air Management UK Limited, Basildon Essex SS14 3WN (GB)
(72) Inventor: LEBRASSEUR, Patrick, 60240 Montagny en Vexin (FR); GIRAUD, Franck, 14420 Ussy (FR); KNIGHT, Stephen, Basildon Essex SS14 3WN (GB)
(74) Representative: Valeo Powertrain Systems
(86) International application number: PCT/EP2016/077899
(87) International publication number: WO 2017/085143

(56) References cited:
- EP-A2- 1 677 404
- EP-A2- 1 677 404
- WO-A1-2015/093138
- WO-A1-2015/093138
- WO-A2-2014/118557
- WO-A2-2014/118557
- FR-A1- 2 830 994
- FR-A1- 2 830 994
- JP-A- 2005 065 374
- JP-A- 2005 065 374
- US-A1- 2015 015 100
- US-A1- 2015 015 100

## Description

### Technical Field

The present invention relates to an electric supercharger, and particularly an electric supercharger comprising a switched reluctance motor having a stator assembly.

### Background of the Invention

Busbar arrangements are disclosed by JP 2005 065374 A, FR 2 830 994 A1 and EP 1 677 404 A2. Figures 1a and 1b show a previously suggested stator assembly for an electric supercharger.

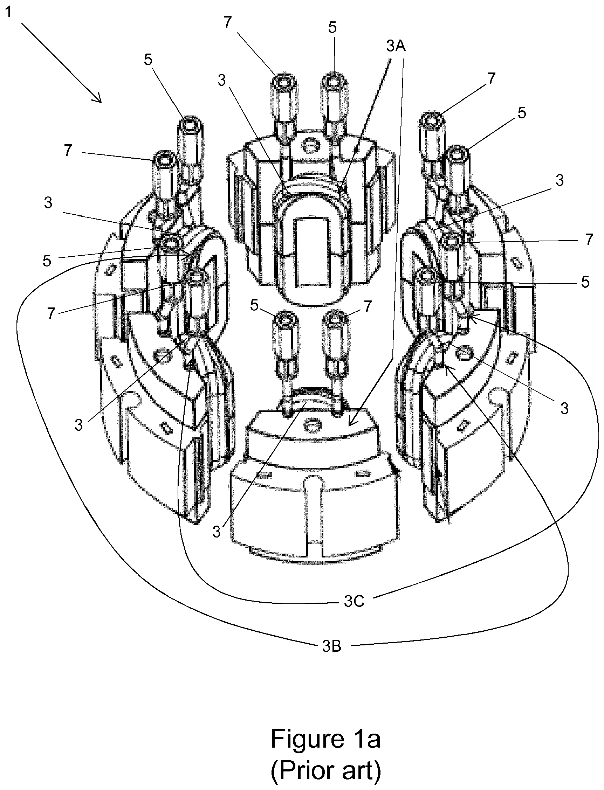

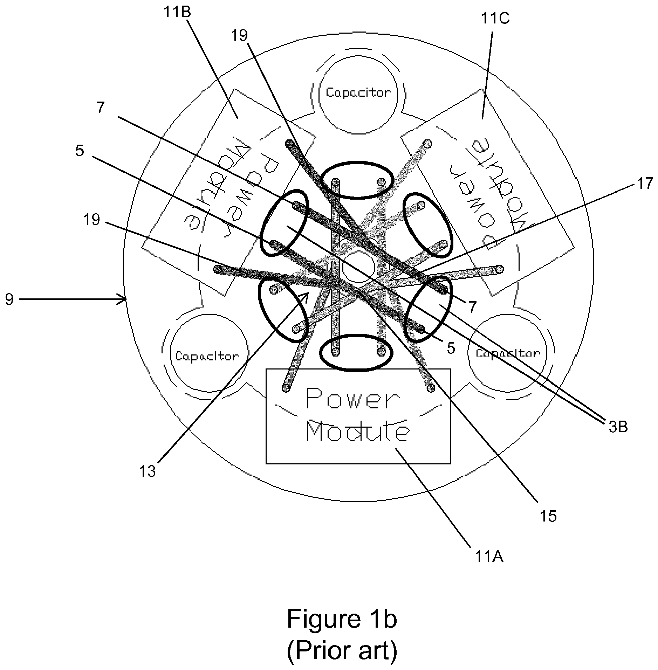

The electric supercharger (not shown) comprises a switched reluctance motor. The stator assembly 1 of the motor has six windings 3 arranged in three pairs (each pair comprising two windings 3A, 3B, 3C opposite one another for forming opposing poles). Each winding 3 is a coil of wire that is wrapped around a metallic core. Each winding 3 has an input termination 5 and an output termination 7 associated with it. These terminations are connectable to an energising source (not shown in Figure 1a). In the stator assembly of Figures 1a and 1b, the terminations 5, 7 extend directly above each respective winding 3. The terminations 5, 7 are therefore arranged in a ring (formed of twelve terminations, in sequential pairs of input terminations 5 and output terminations 7 above each respective winding 3).

To control the energising of the windings, the stator assembly comprises a control module (indicated in general terms by reference numeral 9 and shown in Figure 1b). The control module 9 includes a microprocessor (not shown) for determining and controlling the sequence of energising the windings 3, three power control modules 11A, 11B, 11C each being arranged to supply power to one of the pairs of windings 3A, 3B, 3C, and tracking 13 to connect each pair of windings 3A, 3B, 3C, to a respective power control module 11A, 11B, 11C. For the sake of clarity, only elements relating to one pair of windings 3B are shown in Figure 1b (with the exception of all three power control modules 11A-C).

The tracking 13 (shown only in simplified form in Figure 1b) is formed of three PCB layers stacked above one another, each layer being associated with a respective pair of windings 3A-C. Each layer has a first track 15 connecting together the input terminations 5 of a pair of windings, a second track 17 connecting together the output terminations 7 of the same pair of windings, and additional tracks 19 linking the I/O terminals of the respective power module 11A-C with the first and second tracks 15, 17.

Such a tracking arrangement is complex and may therefore add cost to the control module. Furthermore, the tiered tracking results multiple layers of PCB and therefore in a relatively thick control module which can be undesirable from a cost perspective and/or from the perspective of the PCB's interaction with surrounding components of the supercharger.

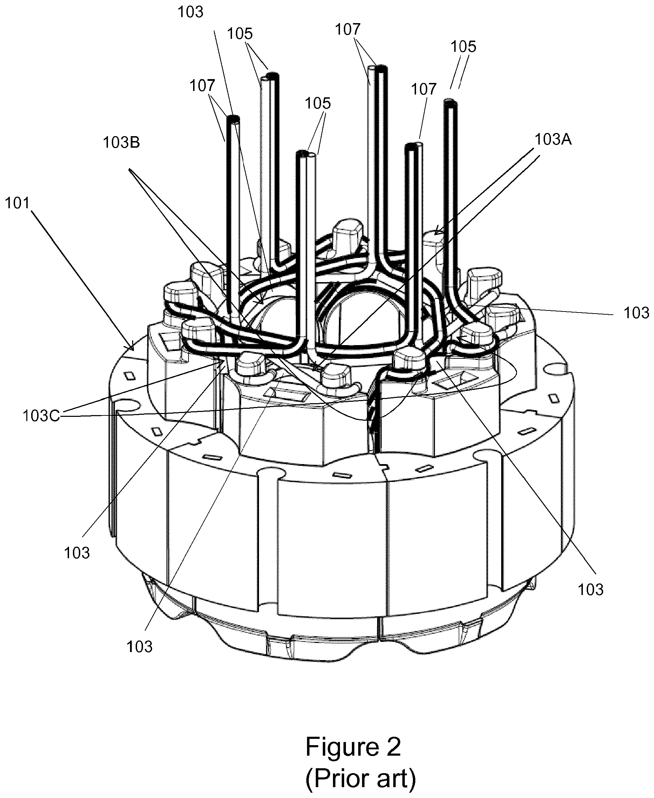

An arrangement that seeks to address the above-mentioned problems is shown in Figure 2 and described in GB2510382 and WO 2014/118557. In that arrangement, the terminations of each pair of windings 103A-C are arranged such that the input terminations 105 for the first and second windings are located adjacent one another and the output terminations 107 of the first and second windings are also located adjacent one another (within each pair of windings, the winding for forming one pole is indicated by the light-coloured wires, and the winding for forming the opposing pole is indicated by dark-coloured wires). By arranging the input terminations for the first and second windings adjacent one another and the output terminations of the first and second windings adjacent one another, the need for complex layers of tracking is removed. However, the arrangement in Figure 2 has been found to be difficult to efficiently manufacture/assemble. For example, locating and arranging the pairs of terminations in the suggested manner can be complex and has been found not to be well-suited to mass-production. Furthermore, the proximity of the wires of each of the windings, around the perimeter of the stator, may increase the risk of arcing or of other undesirable electrical contact between wires.

The present invention seeks to remove or mitigate at least some of the above-mentioned drawbacks.

### Summary of the Invention

According to the invention there is provided an electric supercharger according to CLAIM 1. Providing the pair of busbars associated with each pair of windings, has been found to facilitate relatively easy assembly of the switched reluctance motor, whilst still avoiding the need for complex layers of tracking to connect to a control module.

The input termination is the termination through which current is arranged to flow into the winding. The output termination is the termination through which current is arranged to flow out of the winding. For example there may be a voltage drop from the input termination to the output termination. The input and output terminations may be positive and negative terminations.

The first pole may be a south pole and the second pole may be a north pole (or vice versa). It will be appreciated that the pole formed by each winding is dependent on the direction of the winding and/or the direction of the current flow through the winding.

In principle, the first and second windings could be in any number of different relative positions. However, in more preferable embodiments of the invention, the first and second windings are located opposite one another.

The pairs of busbars are substantially identical in shape. Such an arrangement is beneficial from the point of view of the manufacturing/assembly process. The pairs of busbars are substantially identical in their electrical properties. This has been found to be beneficial because it reduces the risk of electrical mis-match between pairs of busbars and simplifies the control of the switched reluctance motor (SRM).

Within each pair of busbars, the input busbar may be different from the output busbar. For example the input and output busbars may be different lengths.

The stator assembly has a longitudinal axis. The longitudinal axis is typically the axis of rotation of the rotor associated with the stator assembly. The pairs of busbars are rotationally symmetrical about the longitudinal axis of the stator assembly. Having a rotationally symmetrical arrangement has been found to be beneficial because it simplifies the manufacturing/assembly process (especially for mass-production). The pairs of busbars may have rotational symmetry of order 360/n (where n = the number of pairs of windings). For example for a 3-phase motor (having three pairs of windings) the pairs of busbars have rotational symmetry of order 120 degrees.

Each input busbar may comprise a tab for forming an electrical connector. Each output busbar may comprise a tab for forming an electrical connector. The tabs may be upwardly extending for providing an electrical connection above the stator assembly. The tabs are preferably equally spaced around the perimeter of the stator assembly. Such an arrangement has been found to be beneficial from a manufacturing perspective and also provides a simple arrangement for connection to other parts of the SRM (for example to a control module for selectively energising each of the pairs of windings in the stator assembly).

The stator assembly may further comprise a busbar housing. The busbar housing may be arranged to house the plurality of pairs of busbars such that the busbars are electrically insulated from one another. The busbar housing may comprise a series of insulated guide tracks, each guide track being arranged to receive and locate one of the busbars.

Each busbar preferably extends in a substantially circumferential direction to connect the terminations of the respective winding.

The motor is a switched reluctance motor (SRM). The motor includes a control module for controlling the energising of each of the pairs of windings in the stator assembly. The control module selectively energises the pairs of windings to generate a changing, and preferably a rotating, magnetic field. The control module may be arranged to selectively energise more than one pair of windings at any one time. The control module may comprise a plurality of power modules, each power module being arranged to power one of the pairs of windings. The waveform of the signal received by each pair of windings may be the same. The signals received by each pair of windings may be at least partially out of phase with one another.

Each winding is preferably in the form of a coil of wire. The winding may be wrapped around a core.

The windings are preferably arranged in a circle. The windings are arranged with the first and the second windings in each pair being diametrically opposite one another.

The input and output terminations for each winding may be on the end of respective input and output wires to/from the winding. The input and output terminations of each winding are preferably located adjacent that winding (for example directly above the winding). The input and output wires of each winding preferably do not extend in a substantially circumferential direction such that the termination is circumferentially remote from its respective winding.

The input terminations for the first and second windings may be located substantially opposite one another. The output terminations for the first and second windings may be located substantially opposite one another.

The terminations may be positioned radially inwardly of the windings.

The stator assembly comprises a multiplicity of pairs of windings. The stator assembly may comprise three pairs of windings.

### Description of the Drawings

Various embodiments of the invention will now be described, by way of example only, with reference to the accompanying schematic drawings of which:
Figure 1a is a partially exploded perspective view of a previously suggested stator assembly in an electric supercharger;
Figure 1b is a schematic plan view of the stator assembly of Figure 1a, also showing a control module;
Figure 2 is a perspective view of a stator assembly in another previously suggested arrangement;
Figure 3a shows a partially-exploded view of a stator assembly in an electric supercharger according to a first embodiment of the invention;
Figure 3b shows a perspective view of the pairs of busbars of Figure 3a;
Figure 4 is a partially-exploded view of the stator assembly of Figure 3a but with only one pair of busbars shown;
Figure 5 shows the pair of busbars of Figure 4 in isolation;
Figure 6 shows part of stator assembly of Figure 3, but with an upper part of a busbar housing installed.

### Detailed Description

Figures 1a and 1b show a previously suggested stator assembly in an electric supercharger (not shown). As explained above, the stator assembly comprises a control module including tracking 13 to connect each pair of windings 3A, 3B, 3C, to a respective power control module 11A, 11B, 11C. The tracking 13 (shown in simplified form in Figure 1b) is formed of three PCB layers stacked above one another, each layer being associated with a pair of windings 3A-C. Such a tracking arrangement is complex and may therefore add cost to the stator assembly. Furthermore, the tiered tracking results in a relatively thick PCB which can be undesirable from a cost perspective and/or the PCB's interaction with surrounding components of the supercharger.

Figure 2 shows another previously suggested stator assembly. The stator assembly 101 comprises six windings 103 arranged in a circle. The windings 103 can be divided into pairs of diametrically opposite windings 103A-C, each winding 103 in the pair being arranged to form an opposite pole to the other when energised by a control module. Within each pair of windings, the winding for forming one pole is indicated by the light-coloured wires, and the winding for forming the opposing pole is indicated by dark-coloured wires.

By arranging the input terminations for the first and second windings adjacent one another and the output terminations of the first and second windings adjacent one another, the need for complex layers of tracking is removed (and this has therefore been found to be an improvement over the arrangement in Figures 1a and 1b). However, the arrangement in Figure 2 has been found to be difficult to efficiently manufacture/assemble. For example, locating and arranging the pairs of terminations in the suggested manner can be complex and has been found not to be well-suited to mass-production. Furthermore, the proximity of the wires of each of the windings, around the perimeter of the stator, may increase the risk of arcing or of other undesirable electrical contact between wires.

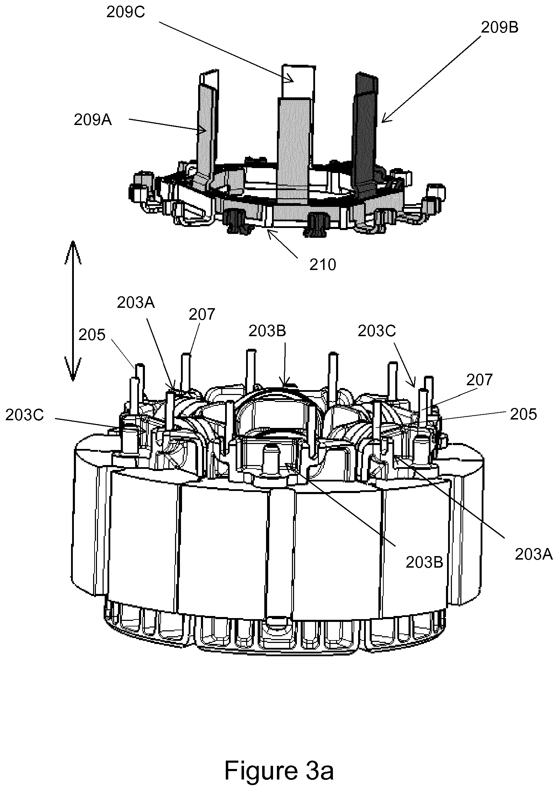

Reference will now be made to Figures 3a to 6, which show a stator assembly in an electric supercharger according to a first embodiment of the invention.

Figure 3a is a partially-exploded view of a stator assembly in an electric supercharger according to a first embodiment of the invention. The stator assembly comprises three pairs of windings 203A-203C arranged in a circle. Each winding has an input termination 205 and an output termination 207 (only those on winding 203A are labelled in Figures 3a for clarity). The windings in each pair are on diametrically opposite sides of the circle and are connected in parallel such that the windings form opposite poles.

The stator assembly is part of a switched reluctance motor (SRM) (not shown) and is arranged such that the pairs of windings can be selectively energised by a control module (not shown), to create a rotating magnetic field. The control module comprises a plurality of power modules (not shown), each power module being arranged to supply power to one of the pairs of windings.

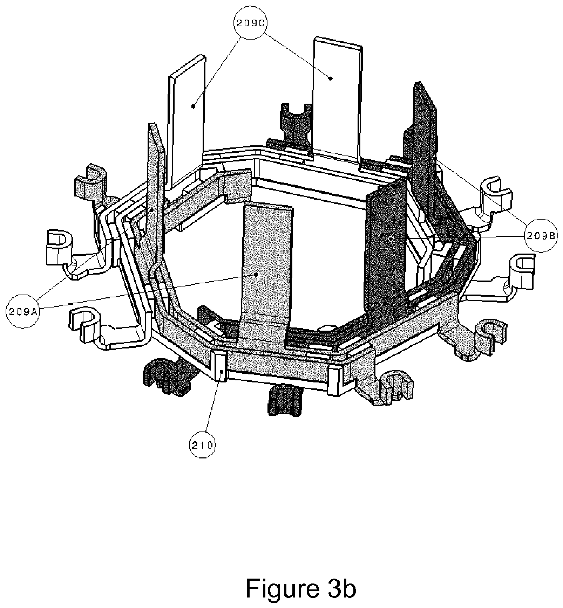

These features of the stator assembly are known *per se* (in this respect the assembly is substantially similar to the arrangement shown in Figure 1a). In contrast to known stator assemblies however, the first embodiment of the invention also comprises three pairs of busbars 209A-209C, to which reference will now be made:
The pairs of busbars 209A-C are located in a busbar housing 210 located above the windings. Each pair of busbars 209A-C is associated with a respective pair of windings 103A-c. In Figures 3a and 3b the different pairs 209A-C are highlighted by the shading on each pair (209A having light shading, 209B having dark shading, and 209C having no shading).

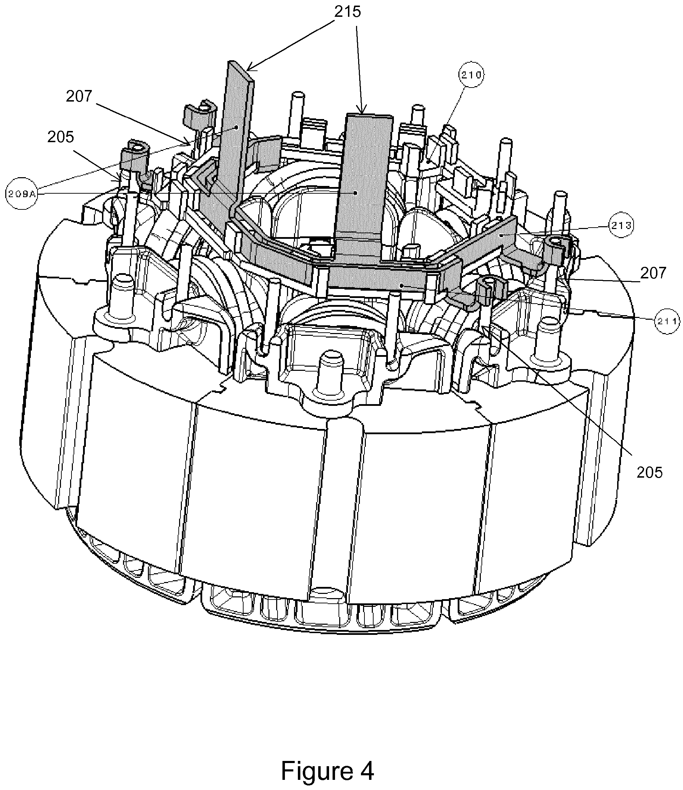

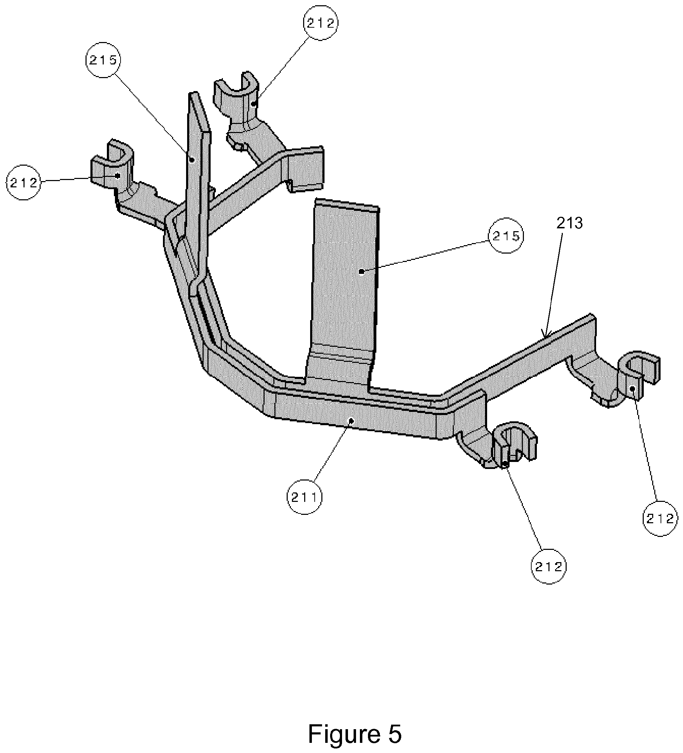

Each pair of the pairs of busbars is identical, so for the sake of clarity, reference is now made to Figures 4 and 5, which show only one of the busbar pairs 209A. The pair of busbars 209A comprises an input busbar 211 and an output busbar 213. The busbars 211, 213 are shaped to extend around the circumference of the stator assembly and are electrically isolated from one another by the busbar housing 210.

The input busbar 211 connects the input terminations 205 of the two windings in the associated pair of windings 203A, whereas the output busbar 213 connects the output terminations 207 of the two windings in the pair of windings 203A. The connection to the winding terminations is made by crimping and welding the U-shaped connectors 212 on the busbar around the respective termination. Each busbar includes an upwardly extending tab 215 that acts as an electrical connector.

The connector tabs 215 are arranged to be connected to a control module (not shown) for selectively energising the coils. It will be appreciated that by connecting the control module across the two connector tabs 215, the pair of windings 203A are electrically connected in parallel.

The first embodiment of the invention has been found to have several advantages: Firstly, providing busbars to connect the pairs of windings has been found to facilitate relatively easy assembly of the stator assembly (and the switched reluctance motor more generally) as well as avoiding the need for complex layers of tracking to connect to a control module. Secondly, providing identical pairs of busbars is beneficial from the point of view of the manufacturing/assembly process and reduces the risk of electrical mis-match between pairs of busbars. Thirdly, in the first embodiment of the invention the pairs of busbars have a rotational symmetry of order 120 degrees about the longitudinal axis of the stator assembly (in other words, if the busbars were rotated 120 degrees about this axis, they would look identical). This has also been found to be beneficial because it simplifies the manufacturing/assembly process (especially for mass-production).

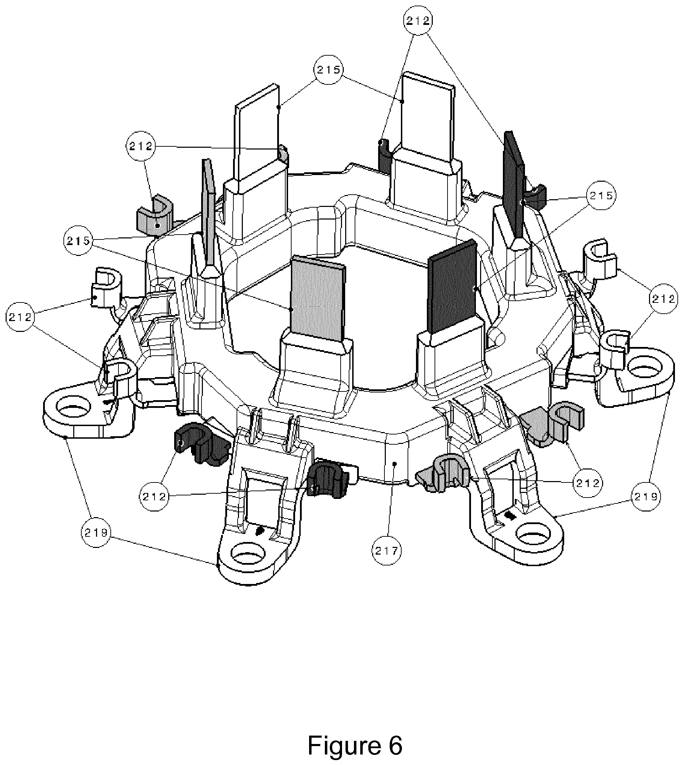

Figure 6 shows a busbar assembly for use in the stator assembly of Figures 3a-5. The busbar assembly includes an electrically-insulating upper housing 217 that protects the pairs of busbars. The upper housing includes slots through which the connector tabs 215 protrude and attachment feet 219 for connection to a lower part of the stator assembly.

Whilst the present invention has been described and illustrated with reference to particular embodiments, it will be appreciated by those of ordinary skill in the art that the invention lends itself to many different variations not specifically illustrated herein. Where in the foregoing description, integers or elements are mentioned which have known, obvious or foreseeable equivalents, then such equivalents are herein incorporated as if individually set forth, provided that this is within the scope of the appended claims. Reference should be made to the claims for determining the true scope of the present invention. It will also be appreciated by the reader that integers or features of the invention that are described as preferable, advantageous, convenient or the like are optional and do not limit the scope of the independent claims.

## Claims

1. A supercharger comprising a switched reluctance motor with a busbar assembly and a stator assembly, the stator assembly comprising a plurality of pairs of windings (203 A-C),
each pair of windings comprising a first winding, for forming a first pole, connected in parallel with a second winding, for forming a second, diametrically opposite, pole,
each winding having an input termination (205) and an output termination (207),
wherein the busbar assembly further comprises a plurality of pairs of busbars (209 A-C), each pair of busbars being substantially identical and being associated with a respective pair of windings, the plurality of pairs of busbars is rotationally symmetrical about a longitudinal axis of the stator assembly, and each pair of busbars (209 A-C)comprising:
an input busbar connecting the input terminations (205) of the first and second windings in the respective pair of windings (203 A-C), and an output busbar connecting the output terminations (207) of the first and second windings in the respective pair of windings (203 A-C)
and wherein the motor includes a control module for selectively energising each of the pairs of windings in the stator assembly,
and wherein the input busbar of each pair of busbars being radially inside the input terminations (205) of the first and second windings and the output busbar of each pair of busbars being radially inside the output terminations (207) of the first and second windings, and wherein the busbars are arranged to radially overlap one after the other in a circle.

2. A supercharger according to any preceding claim, wherein each input busbar and each output busbar comprises a tab (215) for forming an electrical connection.

3. A supercharger according to claim 2, wherein the tabs (215) are upwardly extending for providing an electrical connection above the stator assembly.

4. A supercharger according claim 2 or claim 3, wherein the tabs (215) are equally spaced around the perimeter of the stator assembly.

5. A supercharger according any preceding claim, wherein each busbar extends in a substantially circumferential direction to connect the terminations of the respective winding.

6. A supercharger according to any preceding claim, wherein the windings are arranged with the first and the second windings in each pair being diametrically opposite one another.

7. A supercharger according to any preceding claim, wherein the input (205) and output terminations (207) of each winding are located adjacent that winding.

8. A supercharger according to claim 7 when dependent on claim 6, wherein the input terminations (205) for the first and second windings are located substantially opposite one another, and the output terminations (207) for the first and second windings are located substantially opposite one another.

9. A supercharger according to claim 1, wherein the control module comprises a plurality of power modules, each power module being arranged to supply power to one of the pairs of windings.

## Patentansprüche

1. Superlader, einen geschalteten Reluktanzmotor mit einer Sammelschienenanordnung und einer Statoranordnung umfassend, wobei die Statoranordnung mehrere Paare aus Wicklungen (203 A-C) umfasst,
wobei jedes Paar aus Wicklungen eine erste Wicklung zum Bilden eines ersten Pols umfasst, die parallel mit einer zweiten Wicklung zum Bilden eines zweiten diametral entgegengesetzten Pols geschaltet ist,
wobei jede Wicklung eine Eingangsterminierung (205) und eine Ausgangsterminierung (207) aufweist,
wobei die Sammelschienenanordnung ferner mehrere Paare aus Sammelschienen (209 A-C) umfasst, wobei jedes Paar aus Sammelschienen im Wesentlichen identisch und einem entsprechenden Paar aus Wicklungen zugeordnet ist, die mehreren Paare aus Sammelschienen um eine Längsachse der Statoranordnung rotationssymmetrisch sind und jedes Paar aus Sammelschienen (209 A-C) Folgendes umfasst:
eine Eingangssammelschiene, welche die Eingangsterminierungen (205) der ersten und der zweiten Wicklung in dem entsprechenden Paar aus Wicklungen (203 A-C) verbindet, und eine Ausgangssammelschiene, welche die Ausgangsterminierungen (207) der ersten und der zweiten Wicklung in dem entsprechenden Paar aus Wicklungen (203 A-C) verbindet,
und wobei der Motor ein Steuermodul zum wahlweisen Unterstromsetzen jedes der Paare aus Wicklungen in der Statoranordnung beinhaltet,
und wobei die Eingangssammelschiene jedes Paares aus Sammelschienen radial im Inneren der Eingangsterminierungen (205) der ersten und der zweiten Wicklungen liegt und die Ausgangssammelschiene jedes Paares aus Sammelschienen radial im Inneren der Ausgangsterminierungen (207) der ersten und der zweiten Wicklungen liegt,
und wobei die Sammelschienen so arrangiert sind, dass sie sich nacheinander in einem Kreis radial überlappen.

2. Superlader nach einem vorhergehenden Anspruch, wobei jede Eingangssammelschiene und jede Ausgangssammelschiene einen Streifen (215) zum Bilden einer elektrischen Verbindung umfasst.

3. Superlader nach Anspruch 2, wobei sich die Streifen (215) nach oben erstrecken, um eine elektrische Verbindung über der Statoranordnung bereitzustellen.

4. Superlader nach Anspruch 2 oder Anspruch 3, wobei die Streifen (215) um den Außenumfang der Statoranordnung gleichmäßig beabstandet sind.

5. Superlader nach einem vorhergehenden Anspruch, wobei sich jede Sammelschiene in einer im Wesentlichen umlaufenden Richtung erstreckt, um die Terminierungen der entsprechenden Wicklung zu verbinden.

6. Superlader nach einem vorhergehenden Anspruch, wobei die Wicklungen so arrangiert sind, dass die erste und die zweite Wicklung in jedem Paar einander diametral gegenüber liegen.

7. Superlader nach einem vorhergehenden Anspruch, wobei die Eingangs- (205) und die Ausgangsterminierungen (207) jeder Wicklung angrenzend an die Wicklung angeordnet sind.

8. Superlader nach Anspruch 7, wenn abhängig von Anspruch 6, wobei die Eingangsterminierungen (205) für die ersten und die zweiten Wicklungen im Wesentlichen einander gegenüber angeordnet sind und die Ausgangsterminierungen (207) für die ersten und die zweiten Wicklungen im Wesentlichen einander gegenüber angeordnet sind.

9. Superlader nach Anspruch 1, wobei das Steuermodul mehrere Energiemodule umfasst, wobei jedes Energiemodul dafür arrangiert ist, eines der Paare aus Wicklungen mit Energie zu versorgen.

## Revendications

1. Compresseur de suralimentation, comprenant un moteur à réluctance commutée, avec un ensemble barre omnibus et un ensemble stator, l'ensemble stator comprenant une pluralité de paires d'enroulements (203 A-C),
chaque paire d'enroulements comprenant un premier enroulement, pour former un premier pôle, connecté en parallèle avec un second enroulement, pour former un second pôle diamétralement opposé, chaque enroulement ayant une terminaison d'entrée (205) et une terminaison de sortie (207),
dans lequel l'ensemble barre omnibus comprend en outre une pluralité de paires de barres omnibus (209 A-C), chaque paire de barres omnibus étant sensiblement identique et étant associée à une paire respective d'enroulements, la pluralité de paires de barres omnibus est symétrique en rotation autour d'un axe longitudinal de l'ensemble stator, et chaque paire de barres omnibus (209 A-C) comprenant :
une barre omnibus d'entrée connectant les terminaisons d'entrée (205) des premier et second enroulements dans la paire respective d'enroulements (203 A-C), et une barre omnibus de sortie connectant les terminaisons de sortie (207) des premier et second enroulements dans la paire respective d'enroulements (203 A-C)
et dans lequel le moteur inclut un module de commande pour sélectivement mettre sous tension chaque des paires d'enroulements dans l'ensemble stator,
et dans lequel la barre omnibus d'entrée de chaque paire de barres omnibus est radialement à l'intérieur des terminaisons d'entrée (205) des premier et second enroulements et la barre omnibus de sortie de chaque paire de barres omnibus étant radialement à l'intérieur des terminaisons de sortie (207) des premier et second enroulements,
et dans lequel les barres omnibus sont agencées pour se chevaucher radialement les unes après les autres en un cercle.

2. Compresseur de suralimentation selon une quelconque revendication précédente, dans lequel chaque barre omnibus d'entrée et chaque barre omnibus de sortie comprend une languette (215) pour former une connexion électrique.

3. Compresseur de suralimentation selon la revendication 2, dans lequel les languettes (215) s'étendent vers le haut pour fournir une connexion électrique au-dessus de l'ensemble stator.

4. Compresseur de suralimentation selon la revendication 2 ou la revendication 3, dans lequel les languettes (215) sont espacées de façon égale autour du périmètre de l'ensemble stator.

5. Compresseur de suralimentation selon une quelconque revendication précédente, dans lequel chaque barre omnibus s'étend dans une direction sensiblement circonférentielle pour connecter les terminaisons des enroulements respectifs.

6. Compresseur de suralimentation selon une quelconque revendication précédente, dans lequel les enroulements sont agencés avec les premier et second enroulements dans chaque paire diamétralement opposés l'un à l'autre.

7. Compresseur de suralimentation selon une quelconque revendication précédente, dans lequel les terminaisons d'entrée (205) et de sortie (207) de chaque enroulement sont situées de façon adjacente à cet enroulement.

8. Compresseur de suralimentation selon la revendication 7 lorsqu'elle dépend de la revendication 6, dans lequel les terminaisons d'entrée (205) pour les premier et second enroulements sont situées de façon sensiblement opposée l'une à l'autre, et les terminaisons de sortie (207) pour les premier et second enroulements sont situées de façon sensiblement opposée l'une à l'autre.

9. Compresseur de suralimentation selon la revendication 1, dans lequel le module de commande comprend une pluralité de modules électriques, chaque module électrique étant agencé pour effectuer l'alimentation en électricité à une des paires d'enroulements.
